# EUROPEAN PATENT APPLICATION

(11) **EP 1 954 012 A1**
(43) Date of publication of application: **06.08.2008**
(21) Application number: 08001780.9
(22) Date of filing: 31.01.2008
(51) Int. Cl.: H04M 1/05

(54) **Headset having wired/wireless sub-earphone**

(30) Priority: 01.02.2007 KR 20070010574; 03.04.2007 KR 20070032789
(71) Applicant: Lee, Chang Ryul, 952 Jukjeon-dong, Suji-gu, Yongin-city Kyunggi-do (KR)
(72) Inventor: Lee, Chang Ryul, 952 Jukjeon-dong, Suji-gu, Yongin-city Kyunggi-do (KR)
(74) Representative: Weitzel, Wolfgang

(57) **Abstract**

A headset communicable with a portable terminal is provided, which includes a main body having a plurality of key buttons provided on an outside thereof and a recess formed on one side thereof, a main earpiece fixedly installed on one side of the main body, and a sub-earpiece detachably installed in the recess and connected to the main body wirelessly or through a wired cable. According to the headset, a user can usually receive a voice signal using one earpiece as he/she conveniently carries the headset, and in case of need, the user can listen to a sound signal such as a music signal on stereo to suit the user's taste by using an additionally provided earpiece.

## Description

### CROSS-REFERENCE TO RELATED APPLICATION

This application is based on and claims priorities from Korean Patent Application No. 10-2007-10574 and 10-2007-32789, filed on February 1, 2007 and April 3, 2007, respectively in the Korean Intellectual Property Office, the disclosure of which is incorporated herein in its entirety by reference.

### BACKGROUND OF THE INVENTION

### Field of the invention

The present invention relates to a headset which is additionally provided with a separate earpiece and can improve the receiving sensitivity of the headset by making it possible to selectively wear the earpiece in case of need.

### Description of the Prior Art

A conventional headset, which can communicate with a portable terminal, is provided with two headphone units connected together through a connection structure. The conventional headset is classified into a headphone type headset that is put on a user's head and a back-phone type headset that is would on the back of a user's neck. These headsets may further include a microphone provided on one side of the headphone unit.

However, the headphone type or back-phone type headset has the problem that it is voluminous and thus causes a user inconvenience in carrying or keeping the headset. In order to solve this problem, another type of conventional headset is generally provided with an earpiece which can be worn on a user's ear or fixed to user's clothes with a pin, and thus can provide a user convenience in carrying and using the headset.

Recently, Bluetooth has been adopted as the short-distance wireless communication standard, which makes bidirectional real-time communications possible between a computer and a peripheral device, between a mobile terminal and a computer, or between household electric appliances, which are located in a short distance and connected in a wireless network. With the spread of Bluetooth module in the form of a chip, it is rising to the surface as an important constituent element of the 3^{rd} generation digital mobile communications represented by IMT-2000, in addition to the computer or the household electric appliance.

That is, the Bluetooth is a protocol for short-distance wireless communications proposed as the public standard since a consortium, called the Bluetooth SIG (Special Interest Group), was formed by five companies, Ericsson, Nokia, Intel, Toshiba, and IBM, in 1998. In the short-distance wireless communications, the Bluetooth is substituting for an IrDA (Infrared Data Association).

Recently, the Bluetooth has been mounted in a portable phone, and the most representative function of the portable phone having the Bluetooth mounted therein is a voice call with a headset. This is possible since the Bluetooth has a separate built-in voice channel (SCO) in addition to a data communication channel (ACL), which is not provided in other wireless communication standards such as wireless LAN.

According to the general use of the Bluetooth headset, connection information of opposite parties is stored in two devices through pairing with a portable phone, and if a call is made through the portable phone, a ring signal is produced in the paired Bluetooth headset simultaneously with ringing at the portable phone. At this time, a user can make a voice call through the Bluetooth headset by pressing a call button provided on the Bluetooth headset without the necessity of holding the portable phone. Even in the case of making a call to a portable phone, the user can make the call by pressing a call button of the portable phone or a call button of the Bluetooth headset.

As described above, since it is general that the conventional headset is provided with one earpiece for its miniaturization and light weight, the earpiece is worn on either of the user's ears when a music file is played or a voice call is made, and thus it becomes difficult to secure clear and accurate sound due to a surrounding environment or other causes, so that it is not suitable for content that requires to listen to on stereo, such as music listening, DMB receiving, movie viewing, and so forth.

### SUMMARY OF THE INVENTION

Accordingly, the present invention has been made to solve the above-mentioned problems occurring in the prior art while advantages achieved by the prior art are maintained intact.

One object of the present invention is to provide a headset which can achieve miniaturization and light weight, and make it possible for a user to wear earpieces on either or both of ears in case of need, thereby enabling selective reception of a stereo-mode signal.

In order to accomplish these objects, in one aspect of the present invention, there is provided a headset communicable with a portable terminal, which includes a main body having a plurality of key buttons provided on an outside thereof and a recess formed on one side thereof; a main earpiece fixedly installed on one side of the main body; and a sub-earpiece detachably installed in the recess and connected to the main body wirelessly or through a wired cable.

### BRIEF DESCRIPTION OF THE DRAWINGS

The above and other objects, features and advantages of the present invention will be more apparent from the following detailed description taken in conjunction with the accompanying drawings, in which:
FIG. 1 is a perspective view illustrating a headset according to a first embodiment of the present invention;
FIG. 2 is a perspective view of a headset of FIG. 1, from which a sub-earpiece has been drawn out;
FIG. 3 is a sectional view schematically illustrating a main body including a wireless communication module in a headset of FIG. 1;
FIG. 4 is a view illustrating a headset of FIG. 1 in a used state;
FIG. 5 is an exploded perspective view illustrating a headset according to a second embodiment of the present invention;

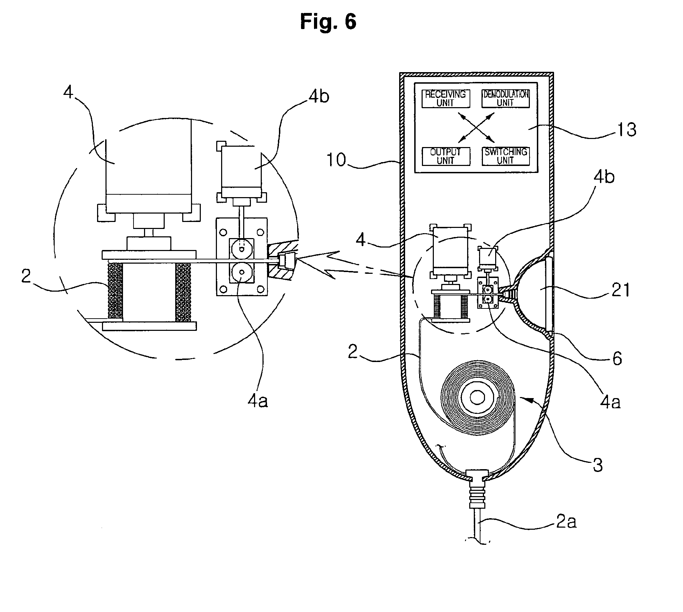

FIG. 6 is a sectional view schematically illustrating a main body having a motor installed therein in a headset as illustrated in FIG. 1;
FIG. 7 is a perspective view illustrating a headset according to a third embodiment of the present invention;
FIG. 8 is a perspective view illustrating a headset of FIG. 7, from which a sub-main body has been drawn out;
FIG. 9 is a sectional view schematically illustrating a main body including a wireless communication module in a headset of FIG. 7;
FIG. 10 is a view illustrating a headset of FIG. 7 in a used state;
FIG. 11 is a perspective view illustrating a headset according to a fourth embodiment of the present invention;
FIG. 12 is a perspective view illustrating a headset of FIG. 11, from which a sub-main body and a sub-earpiece are drawn out;
FIG. 13 is a perspective view schematically illustrating a main body having a wireless communication module in a headset of FIG. 11;
FIG. 14 is a perspective view illustrating a headset according to a fifth embodiment of the present invention;
FIG. 15 is a perspective view illustrating a headset of FIG. 14, from which a sub-main body and a sub-earpiece are drawn out;
FIG. 16 is a sectional view schematically illustrating a main body including a wireless communication module in a headset of FIG. 14; and
FIG. 17 is a sectional view schematically illustrating a main body having a motor installed therein in a headset of FIG. 6.

### DETAILED DESCRIPTION OF THE PREFERRED EMBODIMENTS

Hereinafter, preferred embodiments of the present invention will be described with reference to the accompanying drawings. The matters defined in the description, such as the detailed construction and elements, are nothing but specific details provided to assist those of ordinary skill in the art in a comprehensive understanding of the invention, and thus the present invention is not limited thereto.

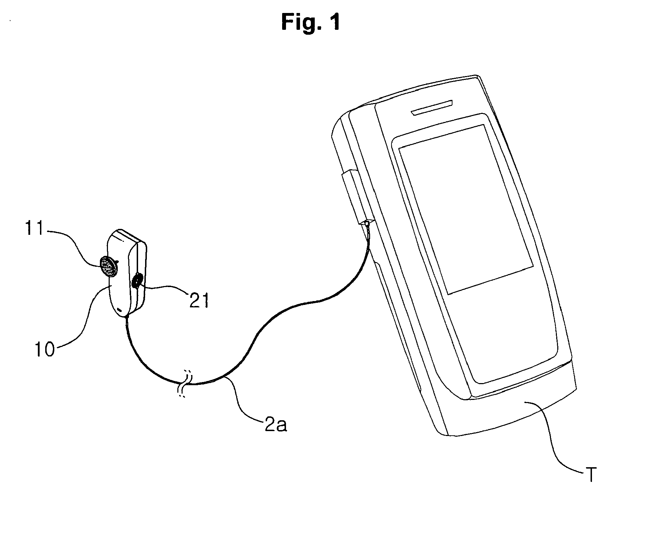

FIGS. 1 to 5 show a headset according to a first embodiment of the present invention. The headset 1 according to the first embodiment of the present invention is communicable with a portable terminal, and includes a main body 10 having a plurality of key buttons provided on an outside thereof and a recess 5 formed on one side thereof, a main earpiece 11 fixedly installed on one side of the main body 10, and a sub-earpiece 21 detachably installed in the recess 5 and connected to the main body wirelessly or through a wired cable 2.

Also, the headset according to the embodiment of the present invention includes a Bluetooth module 13 accommodated therein to be wirelessly communicable with the portable terminal, a main body 10 having a plurality of key buttons and a microphone provided on an outside thereof and a recess 5 formed on one side thereof, a main earpiece 11 fixedly installed on one side of the main body 10, and a sub-earpiece 21 detachably installed in the recess 5 and connected to the main body wirelessly or by wire.

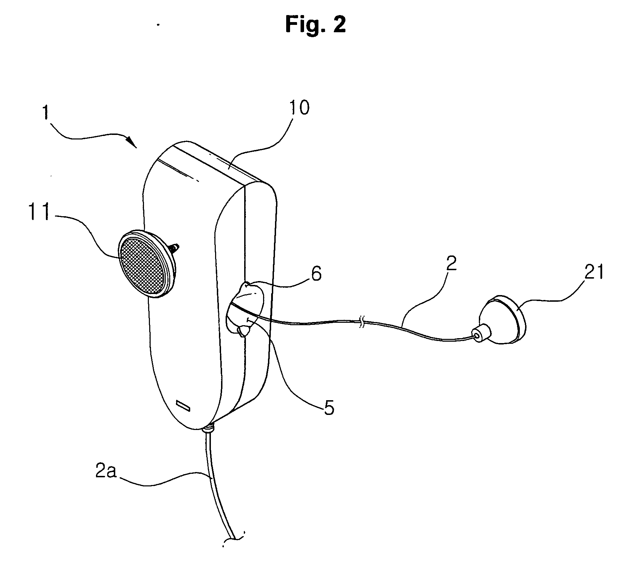

As shown in FIGS. 1 and 2, the headset 1 according to an embodiment of the present invention has the main body 10 in the form of a polygon or a specified curved body to suit a user's taste.

On the rear edge part of the main body 10, although not illustrated in the drawing, a plurality of key buttons are provided. For example, various buttons such as an on/off button, a hold button, a play button for performing an MP3 player function, a stop button, and so forth, are provided.

In the lower part of the main body 10, a cable 2a for connecting to a portable terminal T such as a portable phone, an MP3 player, and so forth, is provided.

Also, on one side surface of the main body 10, a main earpiece 11 that can be worn on a user's ear is installed, and on one part of the main body 10, a separate sub-earpiece 21, which does not interfere with the main earpiece 11, is provided in addition to the main earpiece 11.

The sub-earpiece 21 is electrically connected to the main body 10 through a cable 2, and in order to prevent the sub-earpiece 21 from being projected to an outside when the headset 1 is carried or worn by the user, it is preferable that a recess 5 having a depth and width enough to safely accommodate the sub-earpiece 21 is formed on a proper place of the main body 10.

In this case, on an inner periphery of the recess 5, at least one groove 6 in the form of a circular arc is formed so as to enable a user to easily draw out the sub-earpiece 21 using his/her finger.

Here, since the main body 10 is electrically connected to the portable terminal through a wired cable 2a, and the sub-earpiece 21 is also electrically connected to the main body 10 through a wired cable 2, it is not required to install a separate battery in the main body 10.

In the main body 10, a Bluetooth module 13 may be provided, and in this case, a wireless communication with a portable terminal having a Bluetooth function becomes possible, and thus the connection cable 2a between the portable terminal and the main body 10 as shown in FIG. 1 can be omitted. In this case, since the main body 10 and the portable terminal T can communicate with each other through wireless communications, a separate battery (not illustrated) should be installed in the main body 10. In addition on the main body 10 that corresponds to the place where the battery is installed, a battery cover (not illustrated) may be detachably provided to replace the battery.

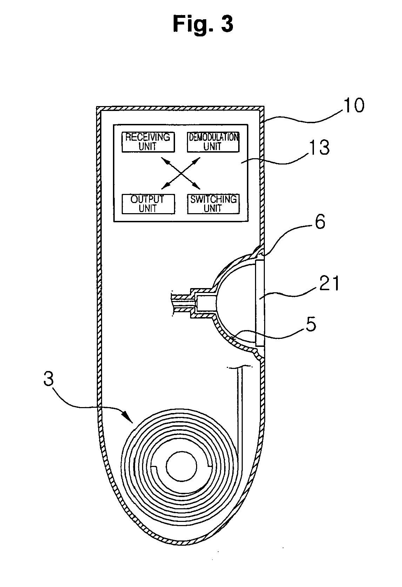

The Bluetooth module 13, as shown in FIG. 3, includes a receiving unit for receiving a sound signal from an external terminal, a demodulation unit for identifying a modulation mode of the received signal and determining an optimal demodulation mode that corresponds to the identified modulation mode, and a switching unit for controlling the receiving unit to selectively receive a phone call signal or a sound signal when a call connection request signal is received.

The Bluetooth module 13 may further include a call control unit for making a bidirectional phone call possible between the headset 1 and the terminal when a signal connection is intended by the user who has recognized the signal request. Accordingly, if the call control unit recognizes the call signal while music data is played through the terminal that supports the Bluetooth function, the music playback is freely stopped and the phone call becomes possible under the control of the call control unit.

In the main body 10, a high-sensitivity microphone (not illustrated) is installed to transfer the user's voice to an opposite party. However, the installation of the microphone is not limited thereto, and the microphone may be installed at an end part of a microd that is drawn out for a predetermined length from the main body 10, so that the microphone comes closer to a user's mouse.

In the embodiment of the present invention as described above, the sub-earpiece 21 is connected to the main body 10 (or Bluetooth module 13) through the wired cable 2. In this case, in the main body 10, a winding means 3, which is composed of a bobbin for winding or drawing out the cable 2 and a reel elastically installed through a spiral spring to rotate clockwise/counterclockwise, is installed, and the cable 2 is automatically wound inside the main body 10. Since the wining means 3 are already known, further explanation thereof will be omitted.

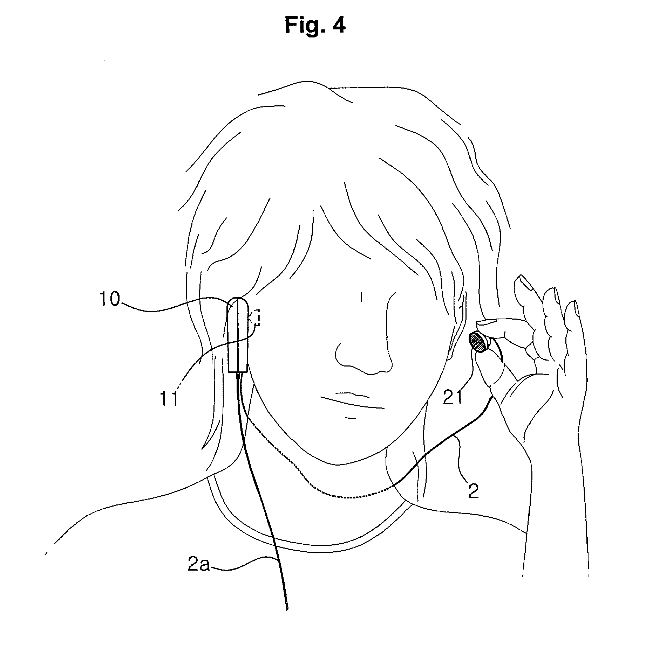

According to the headset 1 of the present invention, as shown in FIG. 4, the main earpiece 11 is worn on one ear of the user, and in case of need, the sub-earpiece 21 is drawn out from the recess 5 and is worn on the other ear of the user. Accordingly, during the voice call, the voice quality can be heightened, and in the case of receiving music or DMB, the stereo sound signal can be played to heighten the listening quality.

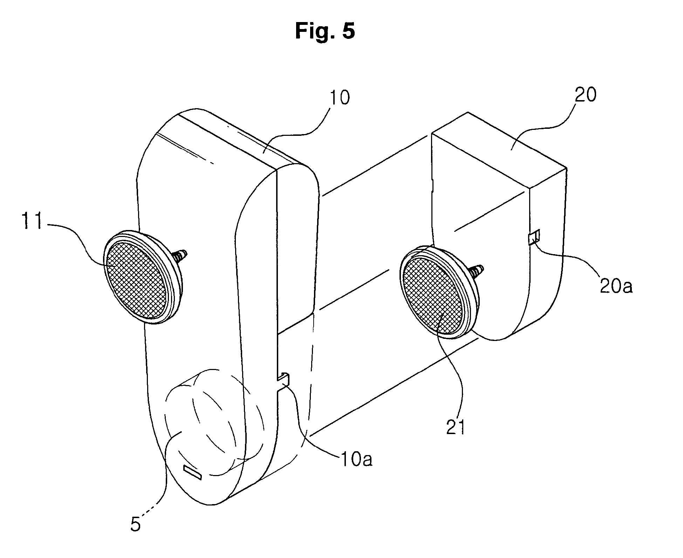

FIG. 5 is an exploded perspective view illustrating a headset according to a second embodiment of the present invention. In the second embodiment of the present invention, the headset 1 has almost the same construction as that according to the first embodiment of the present invention.

However, in the first embodiment of the present invention, the sub-earpiece 21 is connected to the main body through the cable 2, i.e., by wire, whereas in the second embodiment of the present invention, the sub-earphone is wirelessly connected to the main body.

Accordingly, on one side surface of the main body 10, the recess 5 for safely accommodating the sub-piece 21 is formed. In this case, an RF module (i.e., RF transmitter) is installed in the main body 10, and an RF module (i.e., RF receiver) is installed in the sub-main body 20 together with the sub-earpiece 21.

In the case of adopting the Bluetooth function, the Bluetooth module 13 for receiving a signal from the portable terminal (or Bluetooth module of the portable terminal) or receiving a signal transmitted from the Bluetooth module 13 accommodated inside the main body 10 is provided in the sub-main body 20.

In this case, in order to strengthen the combining force between the main body 10 and the sub-main body 20, a fixing projection 10a is formed on the main body 10, and a fixing groove 20a is formed in a corresponding position of the sub-main body 20.

On the other hand, as described above, if the main body 10 is connected to the portable terminal T through the wired cable 2a, it is not required that the main body 10 has a built-in battery. However, if the main body 10 is connected to the portable terminal T through the Bluetooth module, a separate battery is required to be built in the main body 10. In the same manner, in the case where the sub-earpiece 21 communicates with the main body 10 through the Bluetooth module, the sub-main body 20 in which the sub-earpiece 21 is installed requires a separate built-in battery.

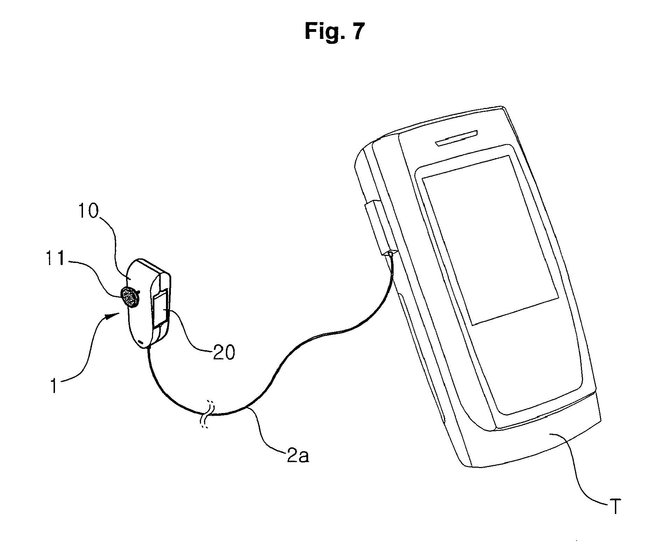

FIGS. 7 to 10 show a headset according to a third embodiment of the present invention. In the third embodiment of the present invention, the headset 1 has almost the same construction as that according to the first embodiment of the present invention.

In the drawings, the same reference numerals are given for the same member having the same function.

The headset 1 according to the first embodiment of the present invention is communicable with a portable terminal, and includes a main body 10 having a plurality of key buttons and a microphone provided on an outside thereof and a recess 5 formed on one side thereof, a main earpiece 11 fixedly installed on one side of the main body 10, a sub-main body 20 connected to the main body 10 through the cable 2 and detachably installed in the recess 5, and a sub-earpiece 21 fixedly installed on one side of the sub-main body 20.

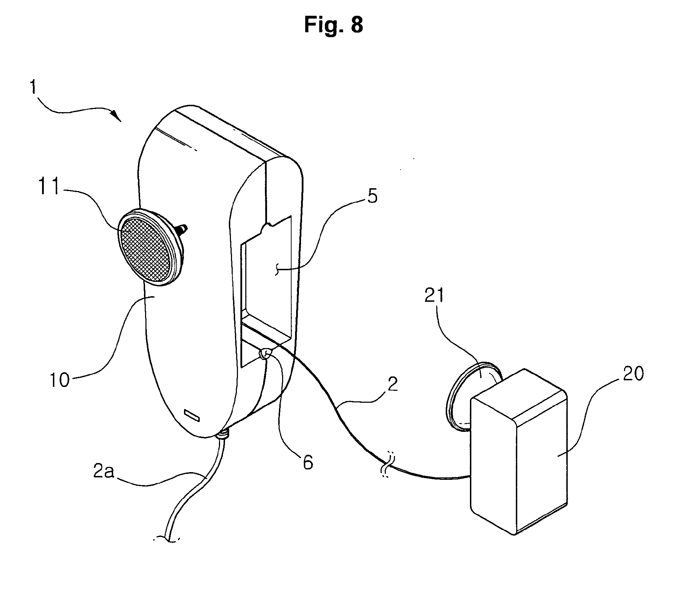

As shown in FIGS. 7 and 8, the headset 1 according to this embodiment of the present invention further includes the sub-main body 20, and on one side of the sub-main body 20, the sub-earpiece 21 is installed so that it can be worn on a user's ear.

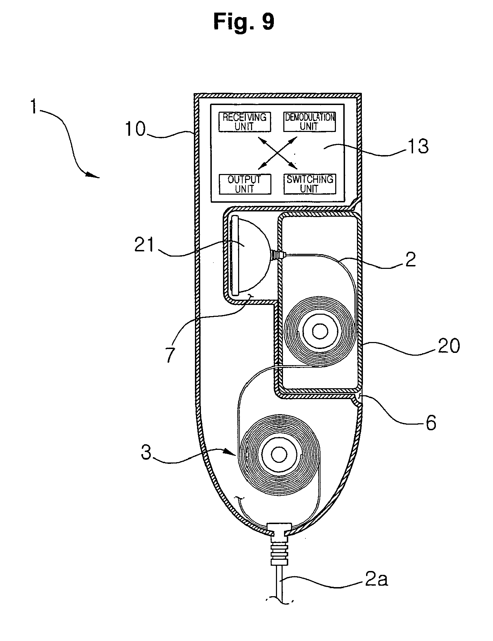

The sub-main body 20 is electrically connected to the main body 10 through the cable 2, and in order to prevent the sub-main body 20 from being projected to an outside of the main body 10 when the headset 1 is carried or worn by the user, it is preferable that the recess 5 having a depth and width enough to safely accommodate the sub-main body 20 is formed on a proper place of the main body 10, which does not interfere with the main earpiece 11. More preferably, as shown in FIG. 9, on an inner side of the recess 5, a groove 7 is further formed so as to safely accommodate the sub-earpiece 21 projected from the sub-main body 20.

On the inner periphery of the recess, at least one groove 6 is formed in the form of a circular arc is formed so as to enable a user to easily draw out the sub-earpiece 21 using his/her finger.

As shown in FIG. 9, a winding means 3 is installed inside the main body 10 in the same manner as the first embodiment, and a winding means 3 is also installed inside the sub-main body 20, and thus the cables 2 for electrically connecting to the main body 10 and the sub-main body 20 are wound by the winding means 3, respectively, to minimize the volume of the main body 10.

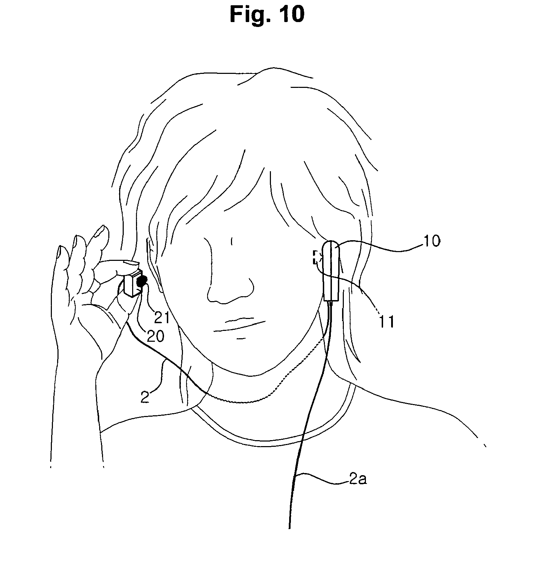

According to the headset 1 according to this embodiment of the present invention, as shown in FIG. 10, the main earpiece 11 is worn on one ear of the user, and in case of need, the sub-main body 20 is drawn out from the recess 5 and the sub-earpiece 21 is worn on the other ear of the user.

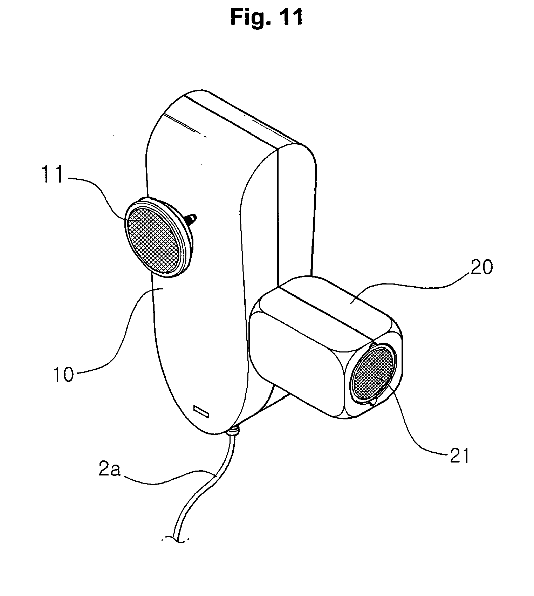

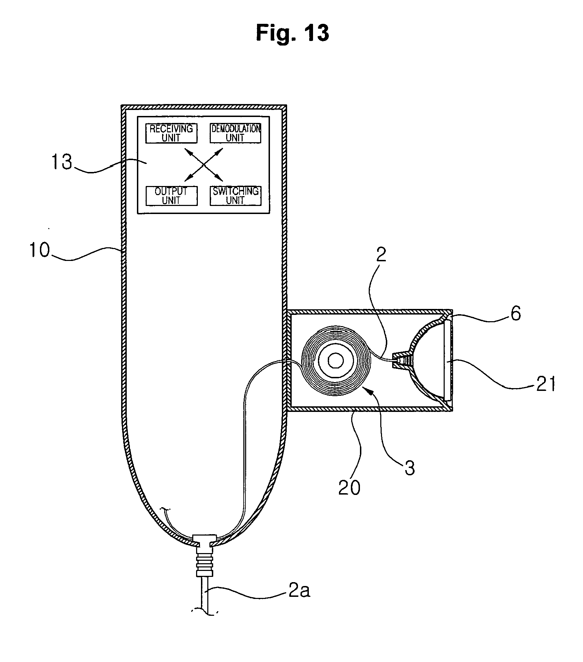

FIGS. 11 to 13 show a headset 1 according to a fourth embodiment of the present invention. In the fourth embodiment of the present invention, the headset 1 has almost the same construction as that according to the third embodiment of the present invention.

In the drawings, the same reference numerals are given for the same member having the same function.

The headset 1 according to the first embodiment of the present invention is communicable with a portable terminal, and includes a main body 10 having a plurality of key buttons and a microphone provided on an outside thereof, a main earpiece 11 fixedly installed on one side of the main body 10, a sub-main body 20 on which a recess 5 is formed, and a sub-earpiece 21 electrically connected to the sub-main body 20 through a cable 2, and detachably installed in the recess 5.

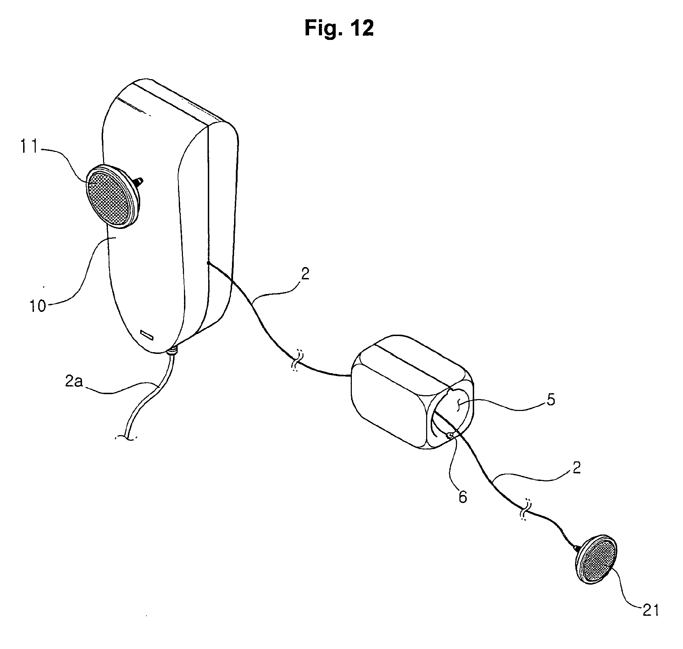

As shown in FIGS. 11 and 12, cable 2 connected between the main body 10 and the sub-main body 20 and the cable 2 connected between the sub-main body 20 and the sub-earpiece 21 are all wound on or drawn out from a winding means 3 installed inside the sub-main body 20. Accordingly, unlike the third embodiment, the winding means 3 is not provided in the main body 10, and thus the volume of the main body 10 can be reduced in comparison to the main body 10 according to the third embodiment of the present invention.

As shown in FIGS. 11 and 12, in order to prevent the sub-earpiece 21main body 20 from being projected to an outside of the sub-main body 20 in a state that the cable 2 for connecting the sub-earpiece 21 and the sub-main body 20 is completely wound in the sub-main body 20, it is preferable that the recess 5 for safely accommodating the sub-earpiece 21 is formed on one side of the sub-main body 20. In this case, on the inner periphery of the recess 5, at least one groove 6 is formed in the form of a circular arc so as to enable a user to easily draw out the sub-earpiece 21 using his/her finger.

According to the headset 1 according to this embodiment of the present invention, the main earpiece 11 is worn on one ear of the user, and in case of need, the sub-earpiece 21 is drawn out from the recess 5 of the sub-main body 20 and then is worn on the other ear of the user.

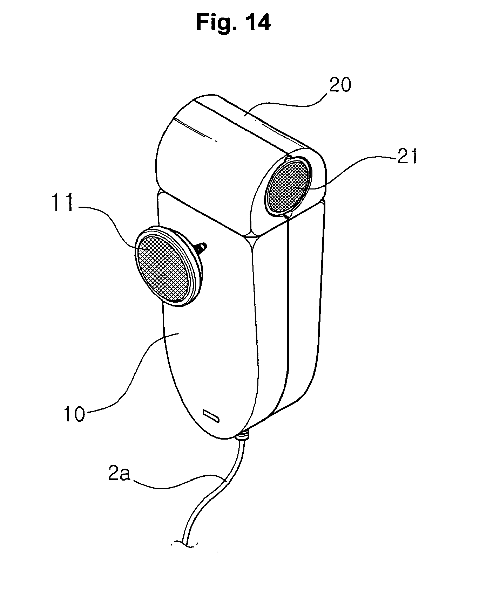

FIGS. 14 to 16 show a headset 1 according to a fifth embodiment of the present invention. In the fifth embodiment of the present invention, the headset 1 has almost the same construction as that according to the fourth embodiment of the present invention.

In the drawings, the same reference numerals are given for the same member having the same function.

The headset 1 according to the first embodiment of the present invention is communicable with a portable terminal, and includes a main body 10 having a plurality of key buttons and a microphone provided on an outside thereof and a signal output port 12 fixedly installed on one side of the main body 10, a main earpiece 11 fixedly installed on one side of the main body 10, a sub-main body 20 having a connector 22 formed on one side thereof to be inserted into and connected to the port 12 and a recess 5 is formed on one side thereof which does not interfere with the connector, and a sub-earpiece 21 electrically connected to the sub-main body 20 through a cable 2, and detachably installed in the recess 5.

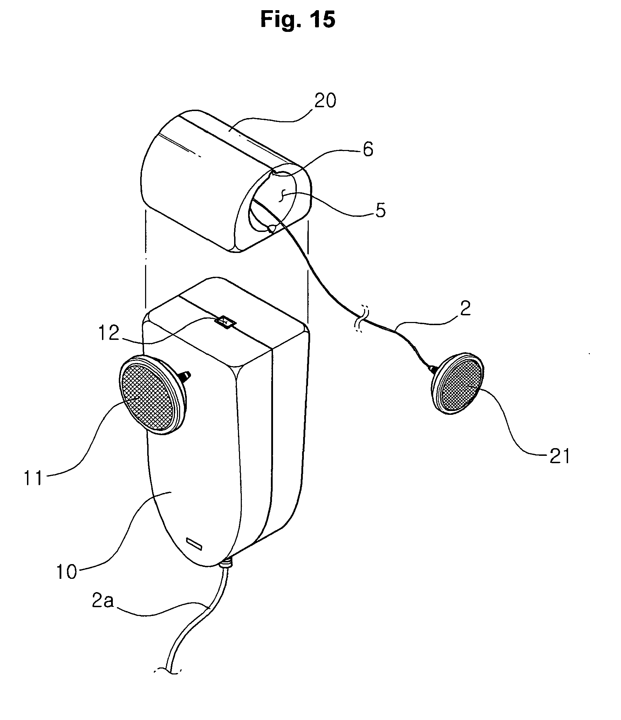

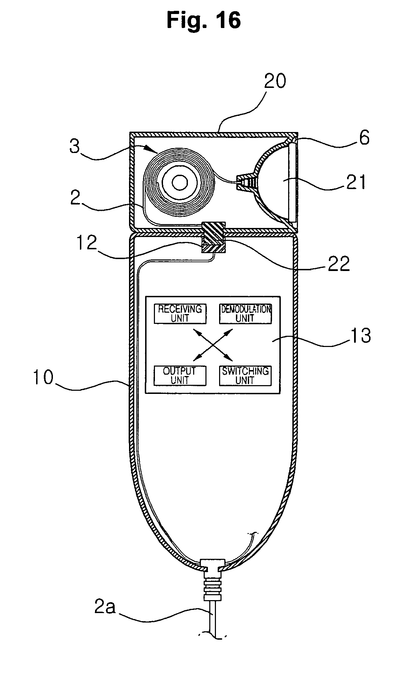

As shown in FIGS. 15 and 16, the signal output port 12 for transferring a sound signal received from the portable terminal to the sub-main body 20 through the main body 10 is installed on one side of the main body 10, and the connector 22 for being connected to the port 12 to receive the signal is installed on one side of the sub-main body 20.

If the connector is connected to the port 12, the sound signal is received in the sub-main body 20, and the received sound signal is transferred to the sub-earpiece 21 that is electrically connected to the sub-main body 20 through the cable 2.

The above-described connector 22 and port 12 enable the sub-main body 20 be attached to or detached from the main body 10, as they serve as a fixing projection and a fixing groove, respectively.

In this embodiment of the present invention, unlike the third and fourth embodiments of the present invention, the main body 10 and the sub-main body 20 are not connected through the cable 2, but are connected by the port 12 and the connector 22. Accordingly, the winding means 3 is not provided in the main body 10, and thus the volume of the main body 10 is further reduced in comparison to the main body 10 according to the third embodiment of the present invention.

The sub-earpiece 21 is electrically connected to the sub-main body 20 through the cable, and the winding means for winding or drawing out the cable 2 is installed inside the sub-main body 20.

The recess 5 for safely accommodating the sub-earpiece 21 is formed on one side of the sub-main body 20, which does not interfere with the connector 22. In this case, on the inner periphery of the recess 5, at least one groove 6 is formed in the form of a circular arc so as to enable a user to easily draw out the sub-earpiece 21 using his/her finger.

The headset 1 according to this embodiment of the present invention is similar to the headset according to the fourth embodiment of the present invention. However, according to the headset according to the fifth embodiment of the present invention, the sub-main body 20 is separated from the main body 10 to be separately carried in the case where the user of the stereo mode is unnecessary. Accordingly, the headset 1 having a smaller and lighter main body can be used in comparison to the headset according to the third and fourth embodiments of the present invention.

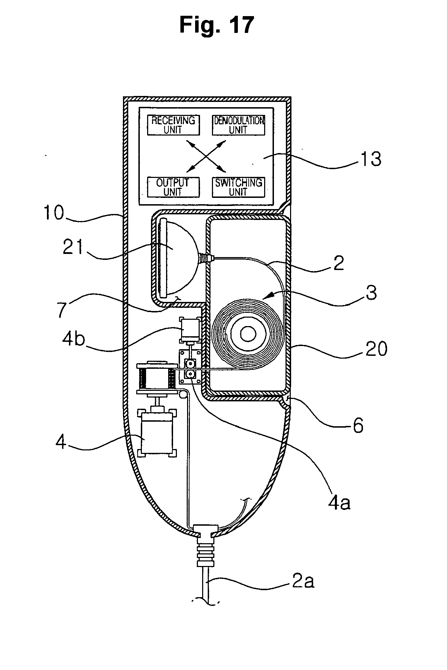

FIGS. 16 and 17 show a headset 1 according to a sixth embodiment of the present invention. The headset 1 according to this embodiment of the present invention further includes a motor 4, connected to the bobbin of the winding means 3, for rotating the bobbin clockwise/counterclockwise in the case where the winding means 3 is installed inside the main body 10.

The motor 4 is electrically connected to a battery part (not illustrated) installed inside the main body 10 via a forward/reverse button (not illustrated) installed outside the main body. If a power is supplied from the battery part to the motor 4 by pressing the forward/reverse button, the motor 4 operates to rotate the bobbin clockwise/counterclockwise, and thus the cable 2 connecting both main bodies is automatically wound or drawn out.

The headset 1 according to this embodiment of the present invention may further include a roller part 4a for guiding the cable 2, and in this case, a second motor 4b, which also receives the power when the power is applied to the motor 4, may be connected to the roller part 4a to operate the roller part 4a, or the motor 4 and the roller part 4a may be connected together through a belt or a chain so that the roller part 4a is operated when the motor 4 is driven. Accordingly, the cable 2 is smoothly wound or drawn out without any delay.

The motor 4, even if the winding means 3 is installed inside the sub-main body 20 as in the third to fifth embodiments of the present invention, can be connected to the winding means 3 in the sub-main body 20.

As shown in FIGS. 9, 13 and 16, even in the third to sixth embodiments of the present invention, the Bluetooth module 13 can be accommodated in the main body 10, and in this case, the structure, function, and other features of the Bluetooth module 13 do not differ from those according to the first embodiment of the present invention. However, in the embodiment where the sub-main body 20 is connected to the main body 10 through the cable 2, the cable 2 is electrically connected to the wireless communication module, and in the case where the sub-main body and the main body are connected through the port 12 and the connector 22 as in the fifth embodiment of the present invention, the port 12 is electrically connected to the Bluetooth module 13.

In the preferred embodiments of the present invention, it is exemplified that the Bluetooth module 13 is used as the wireless communication module. However, the wireless communication module is not limited thereto, and various kinds of wireless communication modules such as ZigBee and so on can also be adopted as the wireless communication module.

As described above, according to the headset according to the embodiments of the present invention, a user can usually receive a voice signal using one earpiece as he/she conveniently carries the headset, and in case of need, the user can listen to a sound signal such as a music signal on stereo to suit the user's taste by using an additionally provided earpiece.

Although preferred embodiments of the present invention have been described for illustrative purposes, those skilled in the art will appreciate that various modifications, additions and substitutions are possible, without departing from the scope and spirit of the invention as disclosed in the accompanying claims.

## Claims

1. A headset communicable with a portable terminal, comprising:
a main body having a plurality of key buttons provided on an outside thereof and a recess formed on one side thereof;
a main earpiece fixedly installed on one side of the main body; and
a sub-earpiece detachably installed in the recess and connected to the main body wirelessly or through a wired cable.

2. The headset of claim 1, further comprising a winding means, installed in the main body, for winding the cable, if the sub-earpiece is connected to the main body through the wired cable.

3. The headset of claim 2, further comprising a motor, connected to the winding means in the main body, for rotating clockwise/counterclockwise.

4. The headset of claim 1, wherein a groove for drawing out the sub-earpiece is formed on the recess.

5. A headset having a wireless communication module that is wirelessly communicable with a portable terminal, the headset comprising:
a main body accommodating the wireless communication module therein, and having a plurality of key buttons and a microphone provided on an outside thereof and a recess formed on one side thereof;
a main earpiece fixedly installed on one side of the main body; and
a sub-earpiece detachably installed in the recess and connected to the main body wirelessly or through a wired cable.

6. The headset of claim 5, wherein the sub-earpiece is electrically connected to the wireless communication module through the wired cable, and the headset further comprising a winding means, installed in the main body, for winding the cable.

7. The headset of claim 5, wherein a groove for drawing out the sub-earpiece is formed on the recess.

8. A headset communicable with a portable terminal, comprising:
a main body having a plurality of key buttons and a microphone provided on an outside thereof and a recess formed on one side thereof;
a main earpiece fixedly installed on one side of the main body;
a sub-main body electrically connected to the main body through a cable, and detachably installed in the recess; and
a sub-earpiece fixedly installed on one side of the sub-main body.

9. The headset of claim 8, further comprising a winding means, installed in the main body and the sub-main body, for winding the cable.

10. The headset of claim 9, further comprising a motor, connected to the winding means in the main body, for rotating clockwise/counterclockwise.

11. The headset of claim 8, wherein a groove for drawing out the sub-earpiece is formed on the recess.

12. The headset of claim 8, wherein an insertion groove for safely inserting the sub-earpiece is formed on an inner side of the recess in the case where the sub-main body is safely placed in the recess.

13. A headset communicable with a portable terminal, comprising:
a main body having a plurality of key buttons and a microphone provided on an outside thereof;
a main earpiece fixedly installed on one side of the main body;
a sub-main body electrically connected to the main body through a cable, and having a recess formed on one side thereof; and
a sub-earpiece electrically connected to the sub-main body through a cable, and detachably installed in the recess.

14. The headset of claim 13, further comprising a winding means, installed in the sub-main body, for winding the cable.

15. The headset of claim 13, wherein a groove for drawing out the sub-earpiece is formed on the recess.

16. A headset communicable with a portable terminal, comprising:
a main body having a plurality of key buttons and a microphone provided on an outside thereof and a port installed on one side thereof;
a main earpiece fixedly installed on one side of the main body;
a sub-main body having a connector installed on one side thereof and inserted into and connected to the port, and a recess formed on one side thereof, which does not interfere with the connector; and
a sub-earpiece electrically connected to the sub-main body through a cable and detachably installed in the recess.

17. The headset of claim 16, further comprising a winding means, installed in the sub-main body, for winding the cable.

18. The headset of claim 18, wherein a groove for drawing out the sub-earpiece is formed on the recess.

19. The headset of any one of claims 8, 13, and 16, further comprising a wireless communication module, installed in the main body, for being wirelessly communicable with a portable terminal.
